# EUROPÄISCHE PATENTSCHRIFT

(11) **EP 0 531 693 B1**
(45) Veröffentlichungstag und Bekanntmachung des Hinweises auf die Patenterteilung: **12.04.1995**
(21) Anmeldenummer: 92112969.8
(22) Anmeldetag: 30.07.1992
(51) Int. Cl.: F01N 3/02, F01N 3/28, F02M 25/07

(54) **Abgasanlage einer Brennkraftmaschine**
Exhaust system of an internal combustion engine
Système d'échappement d'un moteur à combustion interne

(30) Priorität: 11.09.1991 DE 4130178
(43) Veröffentlichungstag der Anmeldung: 17.03.1993
(73) Patentinhaber: MERCEDES-BENZ AG, 70327 Stuttgart (DE)
(72) Erfinder: Schuster, Hans-Dieter, Dipl.Ing., W-7060 Schorndorf (DE); Zahn, Wolfgang, Dipl.-Ing., W-7140 Ludwigsburg (DE); Huss, Roland, Dipl.-Ing., W-7300 Esslingen (DE)

(56) Entgegenhaltungen:
- FR-A- 2 138 266
- US-A- 3 147 097
- PATENT ABSTRACTS OF JAPAN vol. 12, no. 39 (M-665) 5. Februar 1988 & JP-A-62 191 609 (TOYOTA MOTOR CORP.) 22. August 1987
- PATENT ABSTRACTS OF JAPAN vol. 15, no. 358 (M-1156) 10. September 1991 & JP-A-31 41 816 (TOYOTA MOTOR CORP.) 17. Juni 1991

## Beschreibung

Die Erfindung betrifft eine Abgasanlage einer Brennkraftmaschine nach dem Oberbegriff des Patentanspruches 1.

Eine Abgasanlage der gattungsgemäßen Bauart ist aus der JP 62 -162715 bekannt. Bei der dort beschriebenen Abgasanlage ist in einer von einer Abgasleitung abgezweigten Nebenleitung ein Adsorptionsfilter angeordnet, das in der Kaltstartphase der Brennkraftmaschine durch Umlenkung des Abgases mittels einer in der Abzweigung der Abgasleitung angeordneten Abgasklappe angeströmt wird. Nach Funktionaufnahme des Katalysators wird durch Steuerung der Klappe der Abgasstrom im wesentlichen durch die Abgasleitung geführt, welche sich besonders im Vollastbetrieb sehr stark erhitzt. Bei kleinen Bauräumen sind räumlich sich weit erstreckende Nebenleitungen schwer realisierbar, so daß Adsorptionsfilter und Abgasleitung dicht nebeneinander angeordnet sind. Dadurch kann sich jedoch das Adsorptionsfilter schnell überhitzen und somit geschädigt werden.

Der Erfindung liegt die Aufgabe zugrunde, eine gattungsgemäße Abgasanlage derart weiterzubilden, daß bei einer bauraumsparenden Anordnung eine Schädigung des Filters durch Überhitzung verhindert wird.

Die Aufgabe ist erfindungsgemäß durch die im Patentanspruch 1 angegebenen kennzeichnenden Merkmale gelöst.

Dabei stellt das Adsorptionsfilter, das im Verlauf der Abgasleitung angeordnet ist und dessen Filterkörper diese koaxial umgibt, eine sehr kompakte bauraumsparende Bauform dar. Um den Filterkörper vor Überhitzung zu schützen, ist zwischen Filterkörper und Abgasstrom ein Wärmedämmelement vorgesehen. Zur Führung des Abgasstromes durch den Filterkörper weist das Warmedämmelement zumindest teilweise außerhalb des vom Filterkörper umgebenden Abgasleitungsabschnitts Überströmöffnungen auf. Das Wärmedämmelement soll dabei die Eigenschaft besitzen, die hohe Temperatureinwirkung des Abgases auf den Filterkörper so weit abzuschwächen, daß dieses sich zwar erwärmt, jedoch schädigende Temperaturen nicht erreicht. Dies hat den Vorteil, daß bereits am Ende der Kaltstartphase den Filterkörper eine ausreichend hohe Temperatur besitzt, bei der die vom Filterköper adsorbierten Schadstoffe verdampfen, so daß die Regenerationsdauer des Adsorptionsfilters verkürzt wird.

In einer vorteilhaften Ausgestaltung der Erfindung nach Anspruch 2 ist das Wärmedämmelement als Wärmedämmrohr ausgebildet. Über die große Oberfläche des Wärmedämmrohres wird ein großflächiger Wärmekontakt zwischen Abgasstrom und Filterkörper erzielt, so daß eine schnelle und gleichmäßige Erwärmung des Filterkörpers und infolgedessen eine besonders gute Regenerierung des Adsorptionsfilters erreicht wird.

In der nachfolgenden Zeichnungsbeschreibung wird ein Ausführungsbeispiel der Erfindung anhand eines Abgasleitungsabschnitts mit einem Adsorptionsfilter und einem Wärmedämmrohr in einem Längsschnitt näher erläutert.

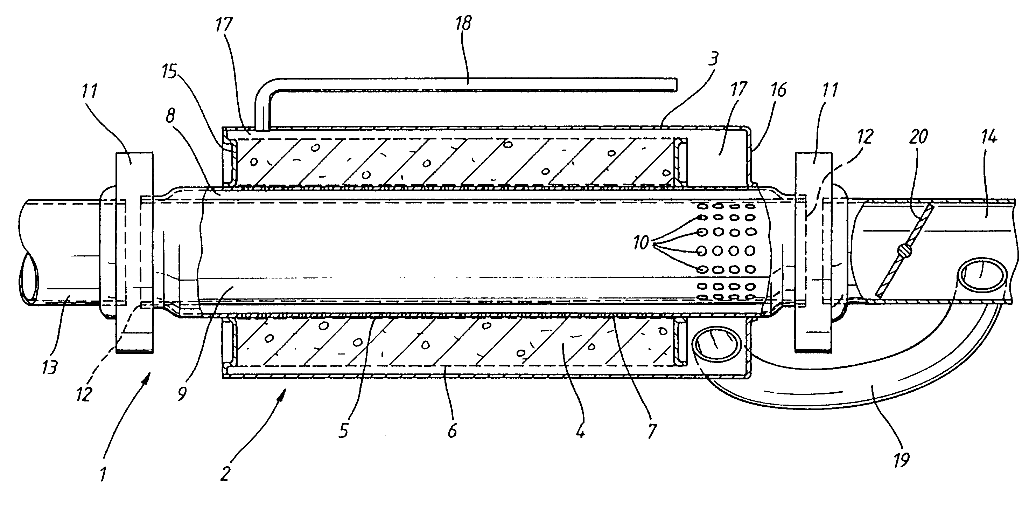

In der Figur ist ein Abschnitt einer Abgasleitung 1 dargestellt, in deren Verlauf ein Adsorptionsfilter 2 vorgesehen ist. Das Adsorptionsfilter 2 besteht aus einem hohlzylindrischen Filtergehäuse 3, das zusammen mit einem in diesem aufgenommenen hohlzylindrischen Filterkörper 4 die Abgasleitung 1 koaxial umgibt. Der Filterkörper 4 kann beispielsweise aus feinkörniger Aktivkohle bestehen, welche am Außen- und am Innenumfang des Filterkörpers 4 aus Stabilitätsgründen von engmaschigen Drahtnetzen 5,6 umschlossen ist. Der Filterkörper 4 ist am Innenumfang auf einem Trägerrohr 7 gehalten, welches längs des Filterkörpers 4 perforiert ist. Das Trägerrohr 7 umgibt unter Bildung eines anströmseitigen Ringraumes 8 in einem Abstand ein Wärmedämmrohr 9, welches über seinen Umfang verteilt stromab des vom Filtermaterial umgebenen Abgasleitungsabschnitts Überströmöffnungen 10 zum Ringraum 8 besitzt. Das Trägerrohr 7 und das Wärmedämmrohr 9 sind mit Verbindungsflanschen 11 an ihren längsseitigen Enden 12 verbunden, wodurch das Adsorptionsfilter 2 in einfacher Weise zwischen einem abgaszuführenden und einen abgasabführenden Abschnitt 13,14 der Abgasleitung 1 eingebaut werden kann. Das Wärmedämmrohr 9 und das Trägerrohr 7 durchragen dabei mit dem Trägerrohr 7 verbundene Stirnseiten 15,16 des Filtergehäuses 3. Das Filtergehäuse 3 begrenzt mit dem äußeren Umfang des Filterkörpers 4 einen abströmseitigen ringförmigen Entnahmeraum 17, an welchen nahe der Stirnseite 15 eine Rückführleitung 18 zu einer nicht weiter dargestellten Ansaugleitung der Brennkraftmaschine angeschlossen ist. Vom Entnahmeraum 17 zweigt zwischen der Stirnseite 16 des Filtergehäuses 3 und der gegenüberliegenden Stirnfläche des Filterkörpers 4 eine Bypassleitung 19 ab. Die Bypassleitung 19 ist mit dem Abgasleitungsabschnitt 14 stromab einer in diesem angeordneten steuerbaren Abgasklappe 20 verbunden.

In der Kaltstartphase wird die Abgasklappe 20 so gesteuert, daß die Abgasleitung 1 im Abgasleitungsabschnitt 14 verschlossen ist. Dadurch wird der Abgasstrom, der durch den Abschnitt 13 der Abgasleitung und das sich anschließende Wärmedämmrohr 9 geführt ist, durch die Überströmöffnungen 10 in den zuströmseitigen Ringraum 8 umgelenkt. Über den perforierten Bereich des Trägerrohres 7 beaufschlagt das Abgas den aus Aktivkohle gebildeten Filterkörper 4. Die Aktivkohle filtert Kohlenwasserstoffe aus dem Abgas heraus, welches von diesen gereinigt aus dem Filterkörper 4 in den Entnahmeraum 17 austritt. Über den Entnahmeraum 17 strömt das Abgas zum wesentlichen Bestandteil durch die Bypassleitung 19 in den Abschnitt 14 der Abgasleitung 1 stromab der Abgasklappe 20. Nach Beendigung der Kaltstartphase ab einer vorgegebenen Temperatur öffnet die Abgasklappe 20 den Abschnitt 14 der Abgasleitung 1, wodurch der Abgasstrom ohne durch das Adsorptionsfilter 2 gelenkt zu werden die Abgasleitung 1 durchströmt. Die während der Kaltstartphase über das Wärmedämmrohr 9 vom Abgasstrom erwärmte Aktivkohle verdampft die von ihr adsorbierten Kohlenwasserstoffe, welche sodann in den Entnahmeraum 17 austreten und über die Rückführleitung 18 von der Ansaugleitung der Brennkraftmaschine zur Verbrennung angesaugt werden.

## Patentansprüche

1. Abgasanlage einer Brennkraftmaschine mit einer Abgasleitung, einem in der Abgasleitung angeordneten Abgasreiniger und mit einem Adsorptionsfilter, dessen Filterkörper mit Abgas durch eine Abgasklappe gesteuert beaufschlagbar ist,
**dadurch gekennzeichnet,**
daß das Adsorptionsfilter (2) im Verlauf der Abgasleitung (1) mit einem diese koaxial umgebenden Filterkörper (4) angeordnet ist, daß zwischen Filterkörper und Abgasstrom ein Wärmedämmelement vorgesehen ist, und daß zur Führung des Abgasstromes durch den Filterkörper (4) das Wärmedämmelement zumindest teilweise außerhalb des vom Filterkörper (4) umgebenden Abgasleitungsabschnitts Überströmöffnungen (10) aufweist.

2. Abgasleitung nach Anspruch 1,
**dadurch gekennzeichnet,**
daß das Wärmedämmelement ein Wärmedämmrohr (9) ist.

3. Abgasleitung nach einem der Ansprüche 1 oder 2,
**dadurch gekennzeichnet,**
daß der Filterkörper (4) hohlzylindrisch ausgebildet und auf einem perforierten Trägerrohr (7) gehalten ist, welches das Wärmedämmrohr (9) umgibt und mit diesem einen anströmseitigen Ringraum (8) begrenzt.

4. Abgasleitung nach einem der Ansprüche 1 bis 3,
**dadurch gekennzeichnet,**
daß ein zwischen Filtergehäuse (3) und Filterkörper (4) ausgebildeter abströmseitiger Entnahmeraum (17) über eine Bypaßleitung (19) an einen stromab der Abgasklappe (20) verlaufenden Abschnitt (14) der Abgasleitung (1) und über eine Rückführleitung (18) an eine Ansaugleitung der Brennkraftmaschine angeschlossen ist.

5. Abgasleitung nach einem der Ansprüche 1 bis 4,
**dadurch gekennzeichnet,**
daß das Wärmedämmrohr (9) und das Trägerrohr (7) an ihren längsseitigen Enden (12) mit Verbindungsflanschen (11) zum Einbau in die Abgasleitung (1) verbunden sind.

## Claims

1. Exhaust gas equipment of an internal combustion engine having an exhaust pipe, an exhaust gas cleaner located in the exhaust pipe and having an adsorption filter to whose filter body exhaust gas is admitted under the control of an exhaust gas butterfly, characterised in that the adsorption filter (2) is located along the course of the exhaust pipe (1) with a filter body (4) surrounding the exhaust pipe (1) coaxially, that a thermal insulation element is provided between the filter body and the exhaust gas flow and that, for guiding the exhaust gas flow through the filter body (4), the thermal insulation element has transfer openings (10) at least partially outside the exhaust pipe section surrounded by the filter body (4).

2. Exhaust pipe according to Claim 1, characterised in that the thermal insulation element is a thermal insulation tube (9).

3. Exhaust pipe according to one of Claims 1 or 2, characterised in that the filter body (4) is designed as a hollow cylinder and is held on a perforated support tube (7) which surrounds the thermal insulation tube (9) and together with the latter bounds an inlet-end annular space (8).

4. Exhaust pipe according to one of Claims 1 to 3, characterised in that an outlet-end extraction space (17) formed between the filter casing (3) and the filter body (4) is connected via a bypass pipe (19) to a section (14) of the exhaust pipe (1) extending downstream of the exhaust butterfly (20) and via a return pipe (18) to an induction pipe of the internal combustion engine.

5. Exhaust pipe according to one of Claims 1 to 4, characterised in that the thermal insulation tube (9) and the support tube (7) are connected at their lengthwise ends (12) to connecting flanges (11) for purposes of installation in the exhaust pipe (1).

## Revendications

1. Système d'échappement d'un moteur à combustion interne, avec une conduite de gaz d'échappement, un épurateur de gaz d'échappement disposé dans la conduite de gaz d'échappement et avec un filtre à adsorption, dont le corps de filtre peut être exposé, de façon commandée, aux gaz d'échappement, au moyen d'un clapet de gaz d'échappement,
caractérisé en ce que,
le filtre à adsorption (2) est disposé sur le trajet de la conduite de gaz d'échappement (1), avec un corps de filtre (4) entourant celle-ci coaxialement, en ce qu'entre le corps de filtre et le courant de gaz d'échappement est prévu un élément d'isolation thermique, et en ce que l'élément d'isolation thermique présente au moins partiellement à l'extérieur du tronçon de conduite de gaz d'échappement entouré par le corps de filtre (4) des ouvertures de déversement (10), pour guider le courant de gaz d'échappement à travers le corps de filtre (4).

2. Conduite de gaz d'échappement selon la revendication 1,
caractérisée en ce que
l'élément d'isolation thermique est un tube d'isolation thermique (9).

3. Conduite de gaz d'échappement selon l'une des revendications 1 ou 2,
caractérisée en ce que
le corps de filtre (4) est cylindrique creux et fixé sur un tube support (7) perforé, qui entoure le tube d'isolation thermique (9) et délimite avec celui-ci un espace annulaire (9), du côté de l'arrivée de l'écoulement;

4. Conduite de gaz d'échappement selon l'une des revendications 1 à 3,
caractérisée en ce que
un espace de prélèvement (17) situé du côté aval, constitué entre le carter de filtre (3) et le corps de filtre (4), est raccordé, par l'intermédiaire d'une conduite de dérivation (19), à un tronçon (14), s'étendant en aval du clapet de gaz d'échappement (20), de la conduite de gaz d'échappement (1) et raccordé, par l'intermédiaire d'une conduite de recirculation (18), à une conduite d'aspiration du moteur à combustion interne.

5. Conduite de gaz d'échappement selon l'une des revendications 1 à 4,
caractérisée en ce que,
le tube d'isolation thermique (9) et le tube support (7) sont reliés à leur extrémité (12) longitudinale à l'aide de brides de liaison (11), en vue d'être montés dans la conduite de gaz d'échappement (1).
